# DEMANDE DE BREVET EUROPEEN

(11) **EP 2 252 034 A1**
(43) Date de publication de la demande: **17.11.2010**
(21) Numéro de dépôt: 10154022.7
(22) Date de dépôt: 18.02.2010
(51) Int. Cl.: H04L 29/06

(54) **Refus d'une demande de service contenu par un message de signalisation SIP "UPDATE"**

(30) Priorité: 13.05.2009 FR 0953154
(71) Demandeur: Alcatel Lucent, 75008 Paris (FR)
(72) Inventeur: Rousseau, Olivier, 92707, COLOMBES (FR)
(74) Mandataire: Chaffraix, Sylvain

(57) **Abrégé**

Client de communication (A) possédant une interface (INT) prévue pour échanger des messages de signalisation (MS_{A}, MS_{B}) avec d'autres clientes (B, C) à travers un réseau de données (N) et un organe de traitement (TRI) pour gérer des sessions multimédia avec ces autres de communication et notamment apte à traiter des messages de signalisation de mise, à jour (MU) contenant au moins une demande de services, en vérifiant pour chaque message de mise à jour si la modification de la session multimédia associée est possible et, si oui, effectuer la modification. L'organe de traitement est prévu pour, en cas d'impossibilité de modifier la session multimédia pour au moins une demande de service, transmettre un message de réponse (contenant un identifiant de cette demande de service.

## Description

La présente invention est relative à l'utilisation du protocole de signalisation SIP dans un réseau de télécommunication de données.

Ce protocole SIP est défini par le RFC 3261 de l'IETF intitulé « Session Initiation Protocol ». Il offre les mécanismes de signalisation et de négociation entre au moins deux parties pour l'établissement d'une session de communication.

Le RFC 3261 défini les mécanismes de base du protocole SIP, permettant l'établissement, la terminaison d'une session multimédia, ainsi que quelques mécanismes de contrôle.

D'autres mécanismes et des enrichissements du protocole ont ensuite été spécifiés dans d'autres RFC issues de l'IETF.

C'est par exemple le cas du RFC 3311 intitulé « The Session Initiation Protocol (SIP) UPDATE Method » qui défini une méthode (ou type de message de signalisation) « Update » qui permet à un client de communication de modifier les paramètres d'une session préalablement établie.

L'usage le plus immédiat de cette méthode UPDATE consiste en la modification des ressources négociées par le mécanisme décrit par le RFC 3264, « An Offer/Answer Model with the Session Description Protocol (SDP) ». Après une première négociation dans le dialogue « INVITE » initial des ressources (CODEC etc.) qui seront utilisées par la session multimédia, la méthode UPDATE permet de modifier un ou plusieurs des paramètres négociées.

D'autres utilisations de la méthode UPDATE ont également été définies.

Ainsi, le RFC 4028 intitulé « Session Timers in the Session Initiation Protocol (SIP) » décrit un mécanisme de rafraichissement périodique d'une session multimédia établie par l'utilisation des messages INVITE ou UPDATE.

Le RFC 4916 intitulé « Connected Identity in the Session Initiation Protocol (SIP) » décrit un mécanisme permettant à un client de communication appelé de faire authentifier son identité par un tiers de certification et de la communiquer au client de communication appelant. Cette communication se fait par un message de signalisation de type UPDATE.

Toutefois ces trois mécanismes sont complètement différents en terme de service. Ils engendrent des traitements différents par le client de communication qui reçoit la requête UPDATE. De surcroit, le message « 200 OK » que le client doit émettre en réponse doit avoir un contenu différent et spécifique à chaque mécanisme.

En outre, le client de communication peut ne pas pouvoir accepter la demande de service transmise dans le message UPDATE. Par exemple, il peut ne pas pouvoir accepter la modification des paramètres du protocole SDP. Dans ce cas, il transmet un message de refus au client émetteur de la requête UPDATE.

Un problème se pose alors lorsqu'un client de communication émetteur transmet plusieurs demandes de service au sein d'un même message de signalisation UPDATE. Si le client récepteur doit en refuser une, il répond par un message de refus. A la réception de ce message de refus, le client émetteur de la requête UPDATE n'aura aucun moyen de savoir laquelle de ses demandes de service a été refusée.

Une solution pourrait consister à ne pas encapsuler plus d'une demande de service dans un même message de signalisation UPDATE. Ainsi, si un client de communication souhaite à la fois modifier les paramètres de la session SDP et modifier son identifiant authentifié, il peut transmettre deux messages de signalisation UPDATE, le premier correspondant au RFC 3264 et le second correspondant au RFC 4916.

Une telle approche engendre donc nécessairement un dédoublement du nombre de requêtes UPDATE et des messages de réponses. Elle pose donc un problème de surcharge du réseau de communication et d'accroissement du traitement nécessaires par les clients de communications émetteur et récepteurs et par les éventuels éléments intermédiaires (« proxy SIP ») impliqués.

Le but de l'invention est de proposer une solution à ce problème, consistant à ajouter dans le message de réponse correspondant à un message de signalisation UPDATE, un identifiant de la (ou des) demande de service contenu dans ce message UPDATE qui a été refusée.

Plus précisément l'invention a pour objet un client de communication possédant
- une interface prévue pour échanger des messages de signalisation avec d'autres clients de communication à travers un réseau de communication de données. Ces messages de signalisation sont conformes au protocole SIP.
- et un organe de traitement de ces messages de signalisation, apte à gérer des sessions multimédia avec au moins un de ces autres clients de communication en fonction de ces messages de signalisation.

L'organe de traitement en question est en outre apte à traiter des messages de signalisation de mise à jour contenant au moins une demande de services, en vérifiant pour chaque message de signalisation de mise à jour :
- si la modification de la session multimédia associée à ce message de signalisation de mise à jour requise par l'au moins une demande de service est possible,
- et si oui, effectuer ladite modification.

Le client de communication selon l'invention est novateur en ce que l'organe de traitement est prévu pour, en cas d'impossibilité de modifier la session multimédia pour au moins une demande de service contenue dans le message de signalisation de mise-à-jour, transmettre un message de réponse contenant un identifiant de l'au moins une demande de service.

Selon des mises en oeuvre de l'invention, l'organe de traitement peut être prévu pour mettre en oeuvre le message de signalisation de mise à jour par un message « UPDATE ».

L'organe de traitement peut être prévu pour mettre en oeuvre le message de réponse par un message « 200 OK ».

Les demandes de service peuvent appartenir à un groupe composé des mécanismes spécifiés par les RFC 4916, 3264 et 4028. Mais d'autres types de demandes de service peuvent bien évidemment être pris en compte.

L'identifiant peut être inséré dans un entête spécifique. Cet entête spécifique peut être un entête « *Rejected* ».

L'invention et ses avantages apparaîtront de façon plus claire dans la description qui va suivre en liaison avec les figures annexées
La figure 1 représente un réseau de communication mettant en oeuvre l'invention.
La figure 2 schématise un échange de messages de signalisation entre deux terminaux de communication.

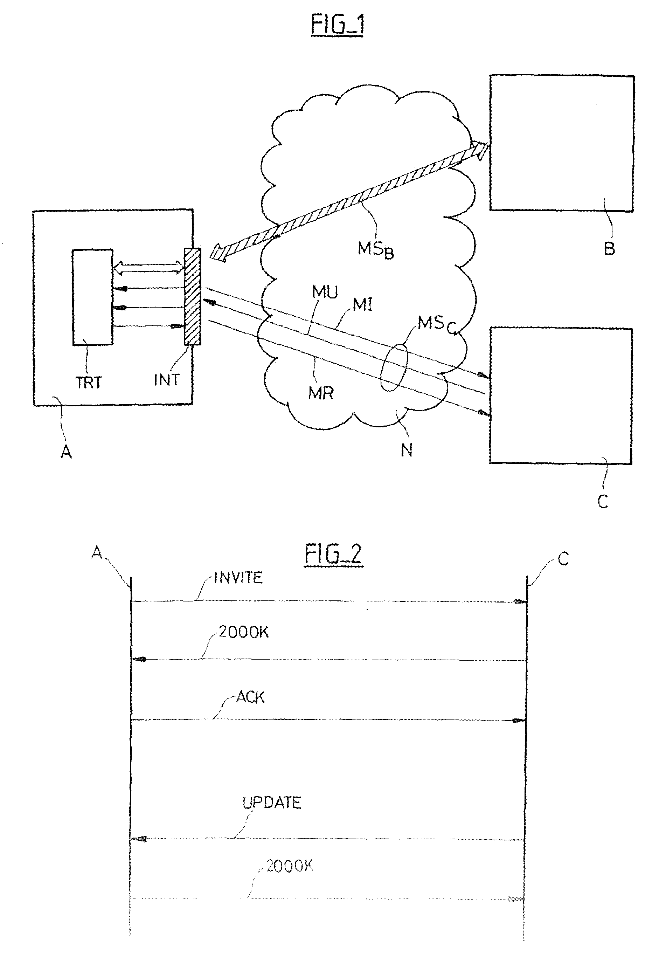

Dans l'exemple de mise en oeuvre de la figure 1, le client de communication A possède une interface INT et un organe de traitement TRT.

L'interface INT est prévue pour échanger des messages de signalisation conformes au protocole SIP avec d'autres clients de communication B, C à travers un réseau de communication de données N. Cette interface est au minimum capable d'émettre et recevoir des messages de signalisation (ou requêtes) conformes au RFC 3261 de l'IETF (Internet Engineering Task Force) mais peut aussi transmettre des messages conformes aux extensions de ce protocole.

Le client de communication peut ainsi échanger des messages de signalisation MSB avec le client de communication B et des messages de signalisation MSC avec le client de communication C.

L'organe de traitement TRT est apte à interpréter le contenu des messages de signalisation reçus et de construire des messages de signalisation à émettre. En fonction du contenu des messages reçus, il peut gérer des sessions multimédia. On entend par « gérer », l'action de créer une nouvelle session multimédia (à la suite d'une requête «INVITE» notarment), de la terminer (à la suite d'une requête « Bye » notamment) ou de la modifier.

Pour modifier une session multimédia préalablement établie, des messages de signalisation de mise à jour peuvent être transmis.

Dans l'exemple de la figure 1, le client de communication A transmet au client de communication C un message d'invitation MI prévu pour initier la création d'une session multimédia. Les messages subséquent amenant à la création effective de cette session ne sont pas représentées sur la figure 1 (messages « 200 OK », « ACK »...). La figure 2 montre plus explicitement le déroulement de l'échange de messages de signalisation entre les clients de communication A et C. Le message d'invitation MI de la figure 1 correspond ou message « INVITE » de la mise en oeuvre de la figure 2.

Un message de signalisation de mise à jour MU peut être transmis par le client C vers le client A. Ce message peut être transmis après l'établissement de la session multimédia afin de la modifier ou entre le message d'invitation et la fin de la négociation débouchant sur l'établissement de la session multimédia.

Le message de mise à jour MU contient au moins une demande de services. Ces demandes de services peuvent requérir la modification de la session multimédia (c'est-à-dire des paramètres et des ressources associées à cette session). Ces demandes de service peuvent concerner des paramètres de la session préalablement négociées lors de l'initiation de la session multimédia.

Il est à noter que certains paramètres peuvent avoir été indiqués comme acceptable dans la phase de négociation initiale, mais ne plus l'être au moment de la réception du message de signalisation de mise-à-jour MU. Par exemple, les CODEC disponibles sur le client de communication sont transmis dans le message d'invitation MI. La session est initiée en utilisant le codec G.729 mais le message d'invitation MI indique que le Codec G.711 est également possible. Plus tard, le client de communication C transmet un message de mise-à-jour contenant comme demande de service le changement au Codec G.711.

Toutefois, le client de communication A peut ne plus être à même d'accepter une session multimédia utilisant ce codec car il n'a plus les ressources disponibles pour le gérer.

Dans l'exemple de la figure 2, ce message de signalisation de mise à jour UPDATE est transmis postérieurement à l'établissement de la session de communication (c'est à dire après le message « ACK » transmis par le client C au client A. Ce message de signalisation de mise à jour MU peut être un message UPDATE tel que défini par le RFC 3311 de l'IETF.

Ce message UPDATE contient au moins une demande de service. Cette demande de service correspond à l'une des utilisations possibles du type de messages UPDATE.

Il peut donc s'agir d'une demande de modification des paramètres relatifs à la session SDP. Une telle utilisation est conforme aux RFC 3311 et 3264.

Il peut en outre contenir une deuxième demande de service. Par exemple, une demande de changement de l'identité selon le RFC 4916.

Ainsi, le message de signalisation de mise à jour MU peut être un message UPDATE contenant un entête « FROM » arec une nouvelle voler et une nouvelle offre SDP.

L'organe de traitement TRT du client de communication A vérifie s'il est possible de modifier les paramètres de la session multimédia correspondant à ce message MU en fonction des deux demandes de service qu'il contient.

Si la modification est possible, il peut l'effectuer.

Sinon, il transmet un message de réponse MR contenant un identifiant de la demande de service refusée. Ce message de réponse peut être de type « 200 OK » ; seul son contenu (qui identifie une demande de service refusée) lui confère sa valeur de notification de refus.

Ainsi, si l'organe de traitement détermine que la demande de service consistant à modifie les paramètres de la session SDP ne peut être réalisée, un identifiant de ce service sera insérée dans le message de réponse MR.

Si la demande de service consistant à changer l'identité « From » de la session ne peut être réalisée, un identifiant de ce service sera insérée dans le message de réponse MR.

Bien sûr, si plusieurs demandes de service ne peuvent pas être réalisées, plusieurs identifiants peuvent être insérées dans le message de réponse MR.

L'identifiant de demande de service refusé peut être inséré dans un entête existant comme l'entête « Reason » tel que défini par le RFC 4411 de l'IETF, intitulé « SIP Reason Header for Preemption Events ».

Il peut également s'agir d'un entête spécifiquement prévu pour cet usage. Dans une implémentation de l'invention, cet entête est nommé « Rejected ». Dans cet entête « Rejected », l'organe de traitement peut insérer le ou les identifiants de demandes de services refusées.

Différents formats d'identifiants peuvent être utilisés.

Par exemple, l'identifiant peut être un mot-clé caractérisant la demande de service. Par exemple le mot clé « from-change » peut être l'identifiant pour la demande de service correspondant au RFC 4916 ; « SDP offer » peut être l'identifiant pour la demande de service correspondant au RFC 3264 et « Timer » peut être l'identifiant pour la demande de service correspondant au RFC 4028.

Alternativement, les identifiants peuvent être les références des RFC correspondant aux demandes de services. Ainsi, « RFC 4916 », « RFC 3264 » et « RFC 4028 » peuvent former des identifiants, ou encore et plus simplement « 4916 », « 3264 » et « 4028 ».

A la réception du message de réponse MR, le client de communication C est informé de façon claire et non ambigüe du refus d'une ou plusieurs demandes de service - le cas échéant. Il est alors à même d'adopter le comportement le mieux approprié.

## Revendications

1. Client de communication (A) possédant une interface (INT) prévue pour échanger des messages de signalisation (MS_{A}, MS_{B}) avec d'autres clients de communication (B, C) à travers un réseau de communication de données (N), lesdits messages de signalisation étant conformes au protocole SIP, et un organe de traitement (TRT) desdits messages de signalisation apte à gérer des sessions multimédia avec au moins un desdits autres clients de communication en fonction desdits messages de signalisation, ledit organe de traitement étant en outre apte à traiter des messages de signalisation de mise à jour (MU) contenant au moins une demande de services, en vérifiant pour chaque message de signalisation de mise à jour si la modification de la session multimédia associée audit message de signalisation de mise à jour requis par ladite au-moins une demande de service est possible et, si oui, effectuer ladite modification, **caractérisé en ce que** ledit organe de traitement (TRT) est prévu pour, en cas d'impossibitité de modifier ladite session multimédia pour au moins une demande de service contenue dans ledit message de signalisation de mise-à-jour, transmettre un message de réponse (MR) contenant un identifiant de ladite au moins une demande de service.

2. Client de communication selon la revendication précédente dans lequel ledit organe de traitement (TRT) est prévu pour mettre en oeuvre ledit message de signalisation de mise à jour par un message « UPDATE ».

3. Client de communication selon l'une des revendications 1 ou 2, dans lequel ledit organe de traitement est prévu pour mettre en oeuvre ledit message de réponse (MR) par un message « 200 OK ».

4. Client de communication selon l'une des revendications 1 à 3, dans lequel lesdites demandes de service appartiennent à un groupe composée des mécanismes spécifiés par les RFC 4916, 3264 et 4028.

5. Client de communication selon l'une des revendications précédentes, dans lequel ledit identifiant est inséré dans un entête spécifique.

6. Client de communication selon la revendication précédente, dans lequel ledit entête spécifique est un entête « Rejected ».
